# EUROPEAN PATENT APPLICATION

(11) **EP 4 506 748 A1**
(43) Date of publication of application: **12.02.2025**
(21) Application number: 23834458.4
(22) Date of filing: 18.04.2023
(51) Int. Cl.: G02F 1/035

(54) **ELECTRO-OPTIC MODULATOR**

(30) Priority: 06.07.2022 CN 202210798464
(71) Applicant: Suzhou Lycore Technologies Co., Ltd., Suzhou, Jiangsu 215123 (CN); Nanjing Lycore Technologies Co., Ltd., Nanjing, Jiangsu 210000 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: Reddie & Grose LLP
(86) International application number: PCT/CN2023/088974
(87) International publication number: WO 2024/007677

(57) **Abstract**

An electro-optic modulator includes a light-splitting element, a light-combining element, two waveguide arms, and a modulation electrode. The two waveguide arms are connected between the light-splitting element and the light-combining element, and each waveguide arm includes a first single-mode waveguide portion, a first coupling portion, a multi-mode waveguide portion, a second coupling portion, and a second single-mode waveguide portion, wherein the width of either of the first single-mode waveguide portion and the second single-mode waveguide portion is smaller than the width of the multi-mode waveguide portion; the first coupling portion is configured to enable light to be coupled into the multi-mode waveguide portion from the first single-mode waveguide portion, and the second coupling portion is configured to enable light to be coupled into the second single-mode waveguide portion from the multi-mode waveguide portion; and the modulation electrode is configured to apply a modulation voltage to the multi-mode waveguide portion of the two waveguide arms.

## Description

### CROSS-REFERENCE TO RELATED APPLICATION

The present application claims priority of the invention patent application No. 202210798464.6, filed on July 06, 2022, and entitled "ELECTRO-OPTIC MODULATOR", and the disclosure of the priority claimed by the present application is incorporated herein by reference in its entirety.

### TECHNICAL FIELD

The present disclosure relates to the technical field of optical communication, and in particular to an electro-optic modulator.

### BACKGROUND ART

In recent years, with rapid development of emerging network application services such as Internet of Things, unmanned driving, telemedicine and distance education, higher requirements have been put forward for high-speed and large-capacity communication technology. Optical communication has achieved rapid development in the direction of high-speed and large-capacity communication due to its characteristics such as large bandwidth, high reliability, low cost and strong anti-interference ability. How to load high-speed electrical signals onto optical carrier is a core research content.

An electro-optic modulator is a modulator that is made based on an electro-optic effect of electro-optic materials. The electro-optic effect means that when a voltage is applied to an electro-optic material, such as a lithium niobate crystal, a gallium arsenide crystal or a lithium tantalate crystal, the refractive index of the electro-optic material will change, resulting in a change in the characteristics of light waves passing through the electro-optic material. The use of the electro-optic effect allows modulation of parameters, such as phase, amplitude, intensity and polarization state, of an optical signal.

With increasingly urgent requirements for the high-speed and large-capacity communication technology, higher requirements have been put forward for the working performance of the electro-optic modulator.

### SUMMARY OF THE INVENTION

The present disclosure provides an electro-optic modulator including a light-splitting element, a light-combining element, two waveguide arms, and a modulation electrode. The two waveguide arms are connected between the light-splitting element and the light-combining element, and each waveguide arm includes a first single-mode waveguide portion, a first coupling portion, a multi-mode waveguide portion, a second coupling portion, and a second single-mode waveguide portion, wherein the width of either of the first single-mode waveguide portion and the second single-mode waveguide portion is smaller than the width of the multi-mode waveguide portion; the first coupling portion is configured to enable light to be coupled into the multi-mode waveguide portion from the first single-mode waveguide portion, and the second coupling portion is configured to enable light to be coupled into the second single-mode waveguide portion from the multi-mode waveguide portion; and the modulation electrode is configured to apply a modulation voltage to the multi-mode waveguide portion of the two waveguide arms.

In some embodiments, the first coupling portion includes a first portion connected to the first single-mode waveguide portion and a second portion connected to the multi-mode waveguide portion, the first portion being opposite to the second portion, and the width of the first portion gradually decreases in the direction away from the first single-mode waveguide portion.

In some embodiments, the second coupling portion includes a third portion connected to the second single-mode waveguide portion and a fourth portion connected to the multi-mode waveguide portion, the third portion being opposite to the fourth portion, and the width of the third portion gradually increases in the direction close to the second single-mode waveguide portion.

In some embodiments, the first coupling portion includes a first portion connected to the first single-mode waveguide portion and a second portion connected to the multi-mode waveguide portion, the second portion being opposite to the first portion, and the width of the second portion gradually increases in the direction away from the first single-mode waveguide portion.

In some embodiments, the second coupling portion includes a third portion connected to the second single-mode waveguide portion and a fourth portion connected to the multi-mode waveguide portion, the fourth portion being opposite to the third portion, and the width of the fourth portion gradually decreases in the direction close to the second single-mode waveguide portion.

In some embodiments, the first coupling portion is a first multi-mode interference coupling element, and the second coupling portion is a second multi-mode interference coupling element.

In some embodiments, the first multi-mode interference coupling element includes a first rectangular interference portion, a first width increasing portion, and/or a first width decreasing portion. The first width increasing portion is connected between the first single-mode waveguide portion and the first rectangular interference portion, and the width of the first width increasing portion gradually increases in the direction close to the first rectangular interference portion. The first width decreasing portion is connected between the first rectangular interference portion and the multi-mode waveguide portion, and the width of the first width decreasing portion gradually decreases in the direction away from the first rectangular interference portion.

In some embodiments, the second multi-mode interference coupling element includes a second rectangular interference portion, a second width increasing portion, and/or a second width decreasing portion. The second width increasing portion is connected between the multi-mode waveguide portion and the second rectangular interference portion, and the width of the second width increasing portion gradually increases in the direction close to the second rectangular interference portion. The second width decreasing portion is connected between the second rectangular interference portion and the second single-mode waveguide portion, and the width of the second width decreasing portion gradually decreases in the direction away from the second rectangular interference portion.

In some embodiments, each waveguide arm includes a first single-mode waveguide portion, a first coupling portion, a multi-mode waveguide portion, a second coupling portion and a second single-mode waveguide portion arranged in sequence. The first single-mode waveguide portions of the two waveguide arms are respectively connected to the light-splitting element, and the second single-mode waveguide portions of the two waveguide arms are respectively connected to the light-combining element.

In some embodiments, the first single-mode waveguide portions of the two waveguide arms are curved and symmetrically arranged. The second single-mode waveguide portions of the two waveguide arms are curved and symmetrically arranged.

In some embodiments, the electro-optic modulator has a folded structure and includes at least one bending region. Each waveguide arm includes a plurality of unit segments, each unit segment including a first single-mode waveguide portion, a first coupling portion, a multi-mode waveguide portion, a second coupling portion and a second single-mode waveguide portion arranged in sequence, and in any two adjacent unit segments, a second single-mode waveguide portion of one unit segment is integrally connected to a first single-mode waveguide portion of the other unit segment in the bending region.

In some embodiments, the two waveguide arms integrally intersect in each bending region.

In some embodiments, the two waveguide arms vertically intersect in each bending region.

These and other aspects of the present disclosure will be clear from the embodiments described below, and will be clarified with reference to the embodiments described below.

### BRIEF DESCRIPTION OF THE DRAWINGS

More details, features, and advantages of the present disclosure are disclosed in the following description of exemplary embodiments with reference to the accompanying drawings, in which:
FIG. 1 is a schematic structural diagram of a conventional electro-optic modulator;
FIG. 2 is a schematic structural top view of an electro-optic modulator according to some embodiments of the present disclosure;
FIG. 3 is a schematic structural top view of an electro-optic modulator according to some embodiments of the present disclosure; and
FIG. 4 is a schematic structural top view of an electro-optic modulator according to some embodiments of the present disclosure.

### DETAILED DESCRIPTION OF EMBODIMENTS

Only some exemplary embodiments are briefly described below. As can be appreciated by those skilled in the art, the described embodiments may be modified in various ways without departing from the spirit or scope of the present disclosure. Accordingly, the accompanying drawings and the description are considered as illustrative in nature, rather than restrictive.

Electro-optic modulation related technologies have been widely developed and applied in the fields of optical communication, microwave photonics, laser beam deflection, wavefront modulation, etc. A Mach-Zehnder modulator is one type of electro-optic modulator, in which an input optical signal is equally split into two branch optical signals, which then enter two waveguide arms, respectively. The two waveguide arms are each made of an electro-optic material and have a refractive index changing with an applied modulation voltage. The change in the refractive index of the waveguide arms may lead to a change in the phases of the branch optical signals. Therefore, an output from the convergence of the two branch optical signals is an interference signal with an intensity changing with the modulation voltage. In brief, the Mach-Zehnder modulator may implement modulation of different sidebands by controlling the modulation voltage applied to the two waveguide arms. As a device for converting electrical signals into optical signals, the Mach-Zehnder modulator is one of the common core devices in optical interconnection, optical computing and optical communication systems.

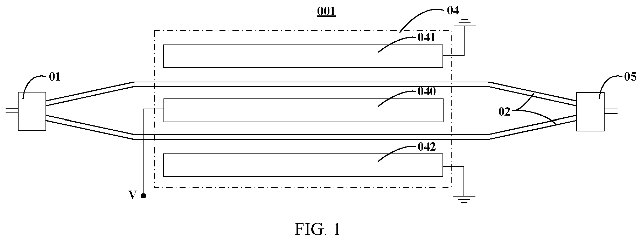

FIG. 1 shows a schematic structural diagram of a conventional Mach-Zehnder modulator. In an ideal state, the two waveguide arms 02 of Mach-Zehnder modulator 001 are identical to each other. When the Mach-Zehnder modulator 001 is not working, neither of the two waveguide arms 02 undergoes an electro-optic effect. Input light passes through a light-splitting element 01 and is then equally split into two branch optical signals. The two branch optical signals are still in the same phase after the two branch optical signals respectively passes through one waveguide arm 02, and then a coherent enhancement signal of the two branch optical signals will be output from a light-combining element 05. When the Mach-Zehnder modulator 001 is working, a modulating electrode 04 (for example, including a signal electrode 040, a first ground electrode 041, and a second ground electrode 042) applies a modulation voltage to the two waveguide arms 02, and the two branch optical signals may differ in phase by an odd or even multiple of Π after the two branch optical signals respectively passes through one waveguide arm 02. When the two branch optical signals differ in phase by an even multiple of Π, the light-combining element 05 outputs a coherent enhancement signal of the two branch optical signals. When the two branch optical signals differ in phase by an odd multiple of Π, the light-combining element 05 outputs a coherent cancellation signal of the two branch optical signals.

In general, after light is transmitted through an optical device, there will be some mixing of magnetic wave modes. For example, when entering the optical device, the light is a TE-mode magnetic wave (with a magnetic field component but no electric field component in the propagation direction), and when emitting from the optical device, although most of the light is a TE-mode magnetic wave, a small portion of TM-mode magnetic wave (with an electric field component but no magnetic field component in the propagation direction) is mixed in the light. In this case, although an output ratio of the TM-mode magnetic waves is small, for some optical devices that require high purity of magnetic wave mode, there will still be a significant impact on their working performance, resulting in some light loss.

Based on this, embodiments of the present disclosure provide an electro-optic modulator, which may improve the working performance of the electro-optic modulator and reduce the transmission loss thereof.

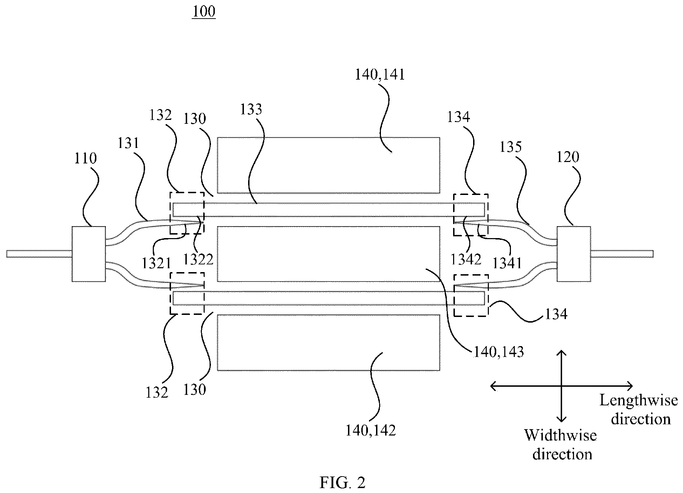

As shown in FIG. 2, some embodiments of the present disclosure provide an electro-optic modulator 100, including a light-splitting element 110, a light-combining element 120, two waveguide arms 130, and a modulation electrode 140. The two waveguide arms 130 are connected between the light-splitting element 110 and the light-combining element 120, and each waveguide arm 130 includes a first single-mode waveguide portion 131, a first coupling portion 132, a multi-mode waveguide portion 133, a second coupling portion 134, and a second single-mode waveguide portion 135. The width of either of the first single-mode waveguide portion 131 and the second single-mode waveguide portion 135 is smaller than the width of the multi-mode waveguide portion 133. The first coupling portion 132 is configured to enable light to be coupled into the multi-mode waveguide portion 133 from the first single-mode waveguide portion 131, and the second coupling portion 134 is configured to enable light to be coupled into the second single-mode waveguide portion 135 from the multi-mode waveguide portion 133. The modulation electrode 140 is configured to apply a modulation voltage to the multi-mode waveguide portion 133 of the two waveguide arms 130.

In the embodiments of the present disclosure, as shown in FIG. 2, with reference to a straight extension portion of any waveguide arm 130, an extension direction thereof is defined as the lengthwise direction, and the direction which is orthogonal to the extension direction and parallel to a device substrate (not shown in the figures) is defined as the widthwise direction.

The light-splitting element 110 is not specifically limited in type, and includes at least one input port and two output ports, such as a light-splitting element with one input and two outputs. The light-combining element 120 is not specifically limited in type, and includes at least two input ports and one output port, such as a light-combining element with two inputs and one output or a light-combining element with two inputs and three outputs. The two waveguide arms 130 connects a respective one of the two output ports of the light-splitting element 110 and a respective one of the two input ports of the light-combining element 120.

The material of the waveguide arm 130 includes an electro-optic material, such as lithium niobate, lithium tantalate, or potassium titanyl phosphate. The modulation electrode 140 is configured to apply a modulation voltage to the multi-mode waveguide portion 133 of the two waveguide arms 130. The form of a structure of the modulation electrode 140 is not limited. For example, in some embodiments, the modulation electrode 140 may include a first ground electrode 141, a signal electrode 143 and a second ground electrode 142 arranged in sequence. One of the waveguide arms 130 is arranged in the electric field formed by the first ground electrode 141 and the signal electrode 143, and the other waveguide arms 130 is arranged in the electric field formed by the second ground electrode 142 and the signal electrode 143.

The first single-mode waveguide portion 131 and the second single-mode waveguide portion 135 serve as single-mode waveguides, with characteristics of a small width dimension, a small refractive index difference (referring to the difference between refractive indexes of crystalline substances of two intermediate or low-level crystal families in different directions), and suitability of transmitting magnetic waves of one mode, such as TE-mode magnetic waves. The multi-mode waveguide portion 133 serves as a multi-mode waveguide capable of transmitting a plurality of modes of magnetic waves, with a width dimension significantly larger than that of the first single-mode waveguide portion 131 and that of the second single-mode waveguide portion 135. Generally, a single-mode waveguide has a higher transmission loss than a multi-mode waveguide, but the single-mode waveguide is more suitable to be designed in a curved shape, with a transmission stability higher than that of a multi-mode waveguide in a curved shape.

In the embodiments of the present disclosure, the two waveguide arms 130 adopt the multi-mode waveguide for optical transmission in a modulation region of the modulation electrode 140 (i.e. a region in which the electric field of the modulation electrode 140 is applied), so that the overall transmission loss of the electro-optic modulator may be low. The two waveguide arms 130 adopt the single-mode waveguide for optical transmission in a region outside the modulation region, which is suitable for various shape designs (such as a curved shape design) and has better transmission stability. By appropriately designing the first coupling portion 132 and the second coupling portion 134, it is possible to have different coupling effects on magnetic waves of different modes. For example, TE-mode magnetic waves are allowed to pass through, while TM-mode magnetic waves are blocked and filtered. In this way, the purity of magnetic wave mode may be improved, thus being especially suitable for some situations where the purity of magnetic wave mode is more demanding. Therefore, the embodiments of the present disclosure may improve the working performance of the electro-optic modulator and reduce the transmission loss thereof.

The form of the specific structures of the first coupling portion 132 and the second coupling portion 134 is not limited. As shown in FIG. 2, in some embodiments, the first coupling portion 132 may include a first portion 1321 connected to the first single-mode waveguide portion 131 and a second portion 1322 connected to the multi-mode waveguide portion 133. The first portion 1321 is opposite to the second portion 1322, and the width of the first portion 1321 gradually decreases in the direction away from the first single-mode waveguide portion 131. The second coupling portion 134 may include a third portion 1341 connected to the second single-mode waveguide portion 135 and a fourth portion 1342 connected to the multi-mode waveguide portion 133. The third portion 1341 is opposite to the fourth portion 1342, and the width of the third portion 1341 gradually increases in the direction close to the second single-mode waveguide portion 135.

The light passes through the first single-mode waveguide portion 131 and is then guided into the first portion 1321 of the first coupling portion 132. As the width of the first portion 1321 gradually decreases in the direction away from the first single-mode waveguide portion 131, the light is forced to exit and enter the second portion 1322 opposite thereto, and then enters the multi-mode waveguide portion 133. Accordingly, after the light passes through the multi-mode waveguide portion 133, it may pass through the fourth portion 1342 and the third section 1341 of the second coupling portion 134 in sequence and then enter the second single-mode waveguide portion 135.

In some embodiments, the width of the second portion 1322 of the multi-mode waveguide portion 133 may also gradually increase in the direction away from the first single-mode waveguide portion 131 (i.e., as opposite to the tendency of change in the width of the first portion 1321); and/or, the width of the fourth portion 1342 may also gradually decrease in the direction close to the second single-mode waveguide portion 135 (i.e., as opposite to the tendency of change in the width of the third portion 1341). Such design may further improve the guiding effect on the light transmission, and thus may further reduce the transmission loss.

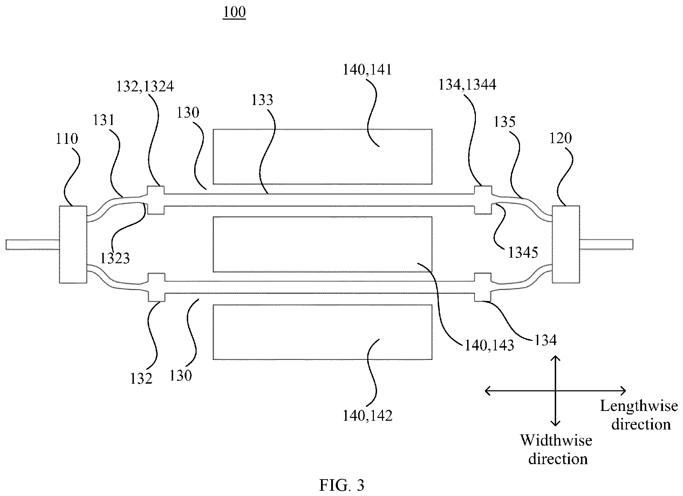

As shown in FIG. 3, in some embodiments, the first coupling portion 132 may also be a first multi-mode interference coupling element, and the second coupling portion 134 may also be a second multi-mode interference coupling element. The working principle of the multi-mode interference coupling elements is based on multi-mode interference, which performs self-imaging at specific positions and periodically reproduces the input light field. By means of design of the multi-mode interference coupling element, it is possible to have different coupling effects on different modes of magnetic waves, thus achieving the effect of improving the purity of magnetic wave mode.

The form of the specific structures of the first multi-mode interference coupling element and the second multi-mode interference coupling element is not limited.

In some embodiments, as shown in FIG. 3, the first multi-mode interference coupling element includes a first rectangular interference portion 1324, a first width increasing portion 1323, and/or a first width decreasing portion (not shown in the figures). The first width increasing portion 1323 is connected between the first single-mode waveguide portion 131 and the first rectangular interference portion 1324, and the width of the first width increasing portion 1323 gradually increases in the direction close to the first rectangular interference portion 1324. The first width decreasing portion is connected between the first rectangular interference portion 1324 and the multi-mode waveguide portion 133, and the width of the first width decreasing portion gradually decreases in the direction away from the first rectangular interference portion 1324.

Accordingly, the second multi-mode interference coupling element includes a second rectangular interference portion 1344, a second width increasing portion (not shown in the figures), and/or a second width decreasing portion 1345. The second width increasing portion is connected between the multi-mode waveguide portion 133 and the second rectangular interference portion 1344, and the width of the second width increasing portion gradually increases in the direction close to the second rectangular interference portion 1344. The second width decreasing portion 1345 is connected between the second rectangular interference portion 1344 and the second single-mode waveguide portion 135, and the width of the second width decreasing portion 1345 gradually decreases in the direction away from the second rectangular interference portion 1344.

The design according to the present disclosure may be applied to both a bar-type electro-optic modulator and a folded type electro-optic modulator. The electro-optic modulator shown in FIG. 2 and FIG. 3 is a bar-type electro-optic modulator, each waveguide arm 130 of which includes a first single-mode waveguide portion 131, a first coupling portion 132, a multi-mode waveguide portion 133, a second coupling portion 134 and a second single-mode waveguide portion 135 arranged in sequence. The first single-mode waveguide portions 131 of the two waveguide arms 130 are respectively connected to the light-splitting element 110, and the second single-mode waveguide portions 135 of the two waveguide arms 130 are respectively connected to the light-combining element 120.

As shown in FIG. 2 and FIG. 3, the first single-mode waveguide portions 131 of the two waveguide arms 130 are curved and symmetrically arranged, and the second single-mode waveguide portions 135 of the two waveguide arms 130 are curved and symmetrically arranged. The first single-mode waveguide portion 131 and the second single-mode waveguide portion 135 have better transmission stability.

In some embodiments of the present disclosure, the electro-optic modulator is a folded type electro-optic modulator adopting a folded design, and the length of the waveguide arm may be designed to increase as desired, so that it is possible to reduce the size of the device in its lengthwise direction and also to achieve better performance.

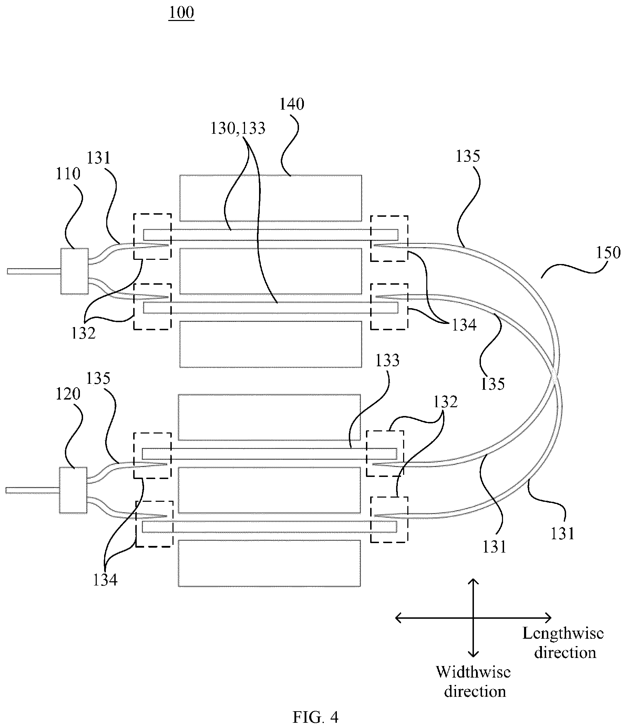

As shown in FIG. 4, the folded type electro-optic modulator includes at least one bending region 150, each waveguide arm 130 includes a plurality of unit segments (illustrated as two unit segments in the figure), and each unit segment includes a first single-mode waveguide portion 131, a first coupling portion 132, a multi-mode waveguide portion 133, a second coupling portion 134 and a second single-mode waveguide portion 135 arranged in sequence. In any two adjacent unit segments of the waveguide arm 130, the second single-mode waveguide portion 135 of one unit segment is integrally connected to the first single-mode waveguide portion 131 of the other unit segment in the bending region 150. As mentioned above, the single-mode waveguide is more suitable for design in a curved shape and has higher transmission stability.

In this embodiment, in each bending region 150, the second single-mode waveguide portion 135 and the first single-mode waveguide portion 131 of one waveguide arm 130 which are integrally connected to each other integrally intersect the second single-mode waveguide portion 135 and the first single-mode waveguide portion 131 of the other waveguide arm 130 which are also integrally connected to each other. The two waveguide arms 130 are designed as an intersection structure in the bending region 150, so that it is possible to ensure that directions of the electric fields of the two waveguide arms 130 in the modulation region are the same. In some embodiments, the two waveguide arms 130 vertically intersect in each bending region 150. In this way, the transmission interference between the waveguide branches at the intersection may be further reduced.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case that the first feature is directly or obliquely above the second feature, or merely indicates that the first feature is at a higher level than the second feature. The first feature being "below", "under" or "beneath" the second feature includes the case that the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. An electro-optic modulator, comprising a light-splitting element, a light-combining element, two waveguide arms, and a modulation electrode, wherein
the two waveguide arms are connected between the light-splitting element and the light-combining element, each waveguide arm comprising a first single-mode waveguide portion, a first coupling portion, a multi-mode waveguide portion, a second coupling portion, and a second single-mode waveguide portion, wherein
the width of either of the first single-mode waveguide portion and the second single-mode waveguide portion is smaller than the width of the multi-mode waveguide portion;
the first coupling portion is configured to enable light to be coupled into the multi-mode waveguide portion from the first single-mode waveguide portion, and the second coupling portion is configured to enable light to be coupled into the second single-mode waveguide portion from the multi-mode waveguide portion; and
the modulation electrode is configured to apply a modulation voltage to the multi-mode waveguide portion of the two waveguide arms.

2. The electro-optic modulator according to claim 1, wherein
the first coupling portion comprises a first portion connected to the first single-mode waveguide portion and a second portion connected to the multi-mode waveguide portion, the first portion being opposite to the second portion, and the width of the first portion gradually decreases in the direction away from the first single-mode waveguide portion.

3. The electro-optic modulator according to claim 1, wherein
the second coupling portion comprises a third portion connected to the second single-mode waveguide portion and a fourth portion connected to the multi-mode waveguide portion, the third portion being opposite to the fourth portion, and the width of the third portion gradually increases in the direction close to the second single-mode waveguide portion.

4. The electro-optic modulator according to claim 1, wherein
the first coupling portion comprises a first portion connected to the first single-mode waveguide portion and a second portion connected to the multi-mode waveguide portion, the second portion being opposite to the first portion, and the width of the second portion gradually increases in the direction away from the first single-mode waveguide portion.

5. The electro-optic modulator according to claim 1, wherein
the second coupling portion comprises a third portion connected to the second single-mode waveguide portion and a fourth portion connected to the multi-mode waveguide portion, the fourth portion being opposite to the third portion, and the width of the fourth portion gradually decreases in the direction close to the second single-mode waveguide portion.

6. The electro-optic modulator according to claim 1, wherein
the first coupling portion is a first multi-mode interference coupling element, and the second coupling portion is a second multi-mode interference coupling element.

7. The electro-optic modulator according to claim 6, wherein
the first multi-mode interference coupling element comprises a first rectangular interference portion, a first width increasing portion, and/or a first width decreasing portion, wherein
the first width increasing portion is connected between the first single-mode waveguide portion and the first rectangular interference portion, and the width of the first width increasing portion gradually increases in the direction close to the first rectangular interference portion; and
the first width decreasing portion is connected between the first rectangular interference portion and the multi-mode waveguide portion, and the width of the first width decreasing portion gradually decreases in the direction away from the first rectangular interference portion.

8. The electro-optic modulator according to claim 6, wherein
the second multi-mode interference coupling element comprises a second rectangular interference portion, a second width increasing portion, and/or a second width decreasing portion, wherein
the second width increasing portion is connected between the multi-mode waveguide portion and the second rectangular interference portion, and the width of the second width increasing portion gradually increases in the direction close to the second rectangular interference portion; and
the second width decreasing portion is connected between the second rectangular interference portion and the second single-mode waveguide portion, and the width of the second width decreasing portion gradually decreases in the direction away from the second rectangular interference portion.

9. The electro-optic modulator according to any one of claims 1 to 8, wherein
each waveguide arm comprises a first single-mode waveguide portion, a first coupling portion, a multi-mode waveguide portion, a second coupling portion and a second single-mode waveguide portion arranged in sequence, wherein
the first single-mode waveguide portions of the two waveguide arms are respectively connected to the light-splitting element, and the second single-mode waveguide portions of the two waveguide arms are respectively connected to the light-combining element.

10. The electro-optic modulator according to claim 9, wherein
the first single-mode waveguide portions of the two waveguide arms are curved and symmetrically arranged; and
the second single-mode waveguide portions of the two waveguide arms are curved and symmetrically arranged.

11. The electro-optic modulator according to any one of claims 1 to 8, wherein
the electro-optic modulator has a folded structure and includes at least one bending region; and
each waveguide arm includes a plurality of unit segments, each unit segment including a first single-mode waveguide portion, a first coupling portion, a multi-mode waveguide portion, a second coupling portion and a second single-mode waveguide portion arranged in sequence, and in any two adjacent unit segments, a second single-mode waveguide portion of one unit segment is integrally connected to a first single-mode waveguide portion of the other unit segment in the bending region.

12. The electro-optic modulator according to claim 11, wherein
the two waveguide arms integrally intersect in each bending region.

13. The electro-optic modulator according to claim 11, wherein
the two waveguide arms vertically intersect in each bending region.
